# EUROPEAN PATENT APPLICATION

(11) **EP 1 619 465 A1**
(43) Date of publication of application: **25.01.2006**
(21) Application number: 04077090.1
(22) Date of filing: 19.07.2004
(51) Int. Cl.: G01B 11/06, G01N 21/17

(54) **Optical monitoring apparatus and method of monitoring optical coatings**

(71) Applicant: NEDERLANDSE ORGANISATIE VOOR TOEGEPAST-NATUURWETENSCHAPPELIJK ONDERZOEK TNO, 2628 VK Delft (NL)
(72) Inventor: van Nijnatten, Petrus Antonius, 5751 XH Deurne (NL); de Wolf, Johannes Marinus Cornelius, 4872 WD Etten Leur (NL)
(74) Representative: Winckels, Johannes Hubertus F.

(57) **Abstract**

A beam is reflected and/or transmitted by a sample with a coating. The path of the beam has a unitary path part where the beam is affected by the coating but is split into parallel sub-paths in a fixed (sample independent) part of the apparatus, components of the beam with different directions of polarization being passed through the sub-paths. A spectrum is determined of ratio's between intensities of the components after they have been affected by the sample, and from the spectrum of the ratio's coating properties are determined. Typically a polarizing splitter is used to split the beam after it has been affected by the sample and the beam is chopped in the sub-paths. After chopping the beam may be recombined before being passed to a detector. The detector may be shared between different arrangements of splitters-choppers-combiners. The beam may be passed to and from the sample through the same splitter.

## Description

The invention relates to an optical inspection apparatus and a method of inspecting optical coatings.

Optical coatings form increasingly important elements of products with optically relevant properties. Coatings are used for example to increase thermal isolation of windows, to reduce glare etc. Coatings are also used in semi-conductor manufacturing processes. When high quality products with optical coatings are manufactured the coating layer needs to be inspected before the product is finished. The inspection has to verify that critical properties such as coating layer thickness, index of refraction absorption or other properties are within a required range.

Known techniques for inspection of coatings include photometry, which involves irradiating the coating layer with a beam of light and measuring the intensity of reflected or transmitted light. The ratio between the intensity of the original beam and the affected light is used to determine the properties of the coating. This technique has the problem that it becomes inaccurate if an unpredictable fraction of the affected light is lost before detection. This means that accurate positioning of the sample is critical for achieving good results. Uncontrolled loss, for example due to tilting of the coating and internal reflections in the glass that carries the coating, affects the accuracy. Precautions have to be taken to collect light consistently, preferably by collecting light that has been reflected in all directions. This makes photometry cumbersome.

Another technique for inspection of coatings uses an ellipsometer. In an ellipsometer the sample is irradiated with linearly polarized light. The resulting reflected light comprises different polarization components. This reflected light passes through a mechanically rotating linear polarizer. The intensity behind the polarizer varies sinusoidally as a function of the rotation of the polarizer. The phase of this sinusoidal variation and the ratio between the minimum and maximum intensity as a function of rotation can be used to estimate properties of the coating.

Ellipsometry is not sensitive to loss of a fraction of reflected or transmitted light. However, careful alignment and accurate polarization angle control is needed, which make ellipsometers very expensive in practice and difficult to use for in-line optical monitoring as a routine part of the manufacturing process of coatings.

Among others, it is an object of the invention to provide for a robust and accurate method of monitoring coatings and an apparatus for performing such an inspection.

Among others, it is a further object of the invention to provide for a method of inspecting coatings that takes little time and an apparatus for performing such an inspection.

The invention provides for a method as set forth in claim 1. According to the invention the path of a beam of light that is reflected by (and/or has transmitted by) the coating is split into sub-paths that pass components with different directions of polarization. The components hit the coating in combination in a unitary part of the path, but are distinguished in a detector dependent on whether a component has travelled along one path or another, for example by chopping the beam in at least one of the sub-paths. Coating properties are determined from measured information about a ratio spectrum of ratio's between the intensities of the components, i.e. the dependence of the ratio on wavelength. The directions of polarization of the different sub-paths may be fixed in predetermined directions, for example parallel and perpendicular to a plane of incidence of the beam.

It has been found that ratio spectrum contains sufficient information to determine the relevant coating properties even from measurements with a single, respective fixed polarization direction for each component. By using components that are split in a fixed (sample independent) part of the apparatus to acquire information about this spectrum, the dependence of the accuracy of the measured properties on accurate rotation angle, which mars the ellipsometer, is substantially removed. If differences between the sub-paths affect the ratio, this is a systematic effect, that is, it is not affected by the sample. Such a systematic effect can easily be corrected for by performing a calibration measurement once, or periodically, to determine a correction factor for the ratio, preferably as a function of wavelength.

Only single orientations of the respective polarized components in the sub paths relative to the plane of incidence (the plane through the beam and the normal of the sample surface where the beam hits the surface) suffice for the determination of coating properties. Preferably an orientation is used wherein one split component contains the polarization in the plane of incidence and the other split component contains the polarization normal to the plane of incidence.

In a preferred embodiment the beam is split into the components after it has been reflected and/or transmitted by the coating. Preferably, a polarizing splitter is used to ensure that components with mutually different polarization directions pass to the sub-paths. However, without deviating from the invention selection of the polarization directions may be performed elsewhere in the sub-paths or at their ends. Also, without deviation from the invention the sub-paths may be in a part of the beam path through which the beam passes before hitting the coating.

Preferably a shared detector is used to acquire intensity information of both split components. This avoids dependence on differences in the sensitivity of different detectors. For this purpose, a beam combining optical element is preferably used between the beam splitter and the detector and a chopper is inserted between the beam combining optical element and the beam splitter. Preferably the beam splitter and/or the beam combining optical element are of the polarizing type.

Preferably the chopper alternately passes only a first split component and a second split component, so that the shared detector alternately measures information about the intensities of the components (this does not exclude that the chopper intermediately blocks or passes both components). However, other embodiments are possible, for example alternately passing a first component and both component, since the ratio of the intensity of the first component and the sum of the components is a one to one function of the ratio between the intensities of the first and second components.

In a further embodiment the shared detector is also shared between a plurality of combinations of a polarizing splitter, a chopper and an optical combiner. The different combinations may be coupled to the shared detector via optical fibres for example. Because only a single output of the beam combining optical element needs to be coupled to the detector and the measured coating properties depend only on the ratio spectrum, the coupling between the beam combining optical element and the detector is not critical for the accuracy of the measurements. By sharing the detector the cost of the apparatus can be considerably reduced without sacrificing accuracy.

In an embodiment the beam is passed to the sample through the beam splitter and received back from the sample through the same splitter. In this case, when no perpendicular incidence on the sample is used, a mirror or a retroreflector may be placed to return the beam after reflection or transmission by the sample, so that the beam is affected twice by the sample before returning to the beam splitter for measurement. This increases the sensitivity of the measurement for coating properties.

These and other objects and advantageous aspects of the invention will be described by means of non-limitative examples using the accompanying figures.
Figure 1 shows an optical measurement apparatus;
Figure 1a shows a chopper disk;
Figure 2 shows a flow-chart of computations for inspection;
Figure 3 illustrates a coating model;
Figure 4 illustrates a further optical measurement apparatus;
Figure 5 illustrates another optical measurement apparatus;
Figure 6 illustrates another optical measurement apparatus.

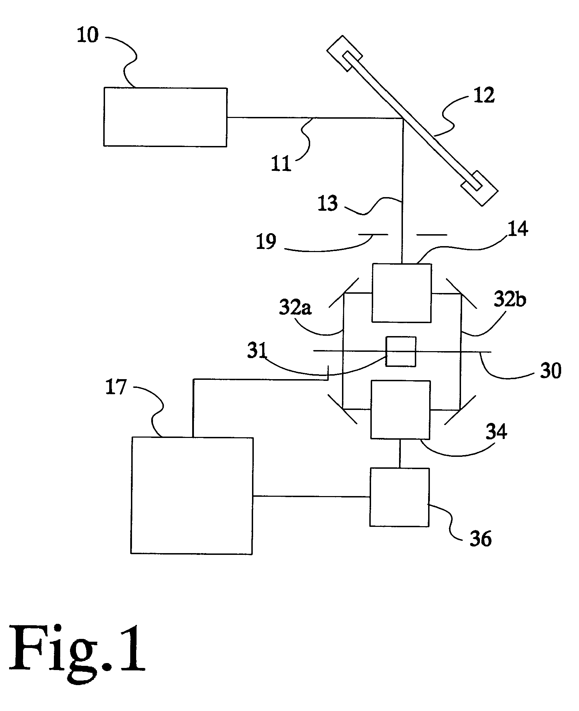

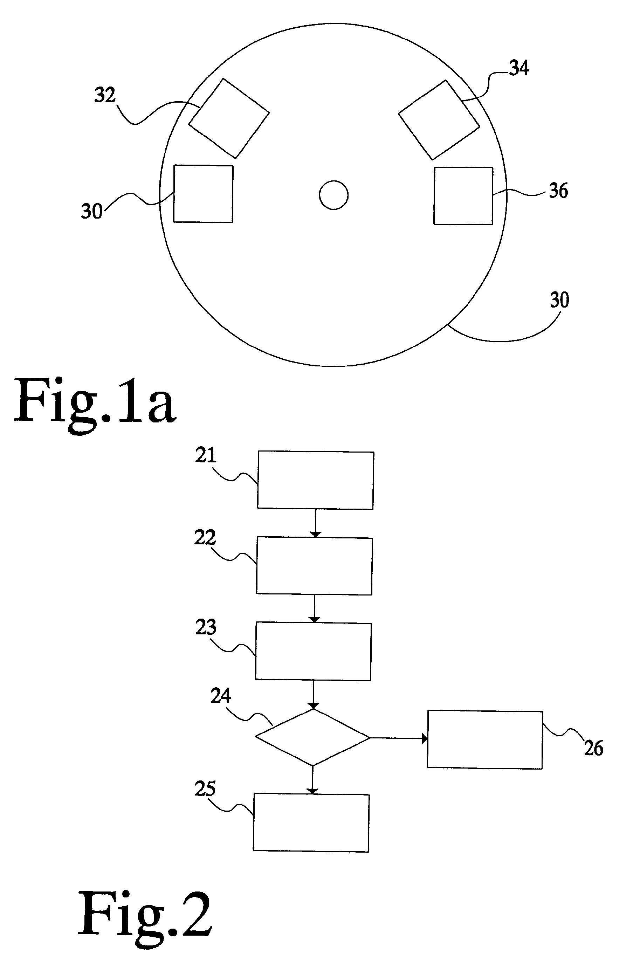

Figure 1 shows an optical measurement apparatus comprising a beam source 10, a sample 12 in a holder, a polarizing beam splitter 14, a beam chopper disk 30 mounted on a chopper motor 31, a beam combining optical element (referred to as "combiner" in the following), a detector 36, a computer 17 and an aperture.

Figure 1a shows an example of a chopper disk 30. Chopper disk 30 has openings 30, 32, 34, 36. A first pair of openings 30, 36 is located so that chopper disk 30 will pass both split beams 32a,b when appropriately rotated. Second and third openings 32, 34 are located so that only one of split beams 32a,b will be transmitted at a time.

In operation beam source 10 directs a beam 11 at sample 12 which reflects a reflected beam 13 to polarizing beam splitter 14 through aperture 19. Beam splitter 14 splits reflected beam 13 into split beams 32a,b which contain mutually different polarization components from reflected beam 13. Preferably beam splitter 14 splits off a first component of intensity Rp with polarization in the plane of incidence (the plane through the normal to the surface of the sample and the incoming beam direction) and a second component of intensity Rs with polarization normal to in the plane of incidence.

The split beams 32a,b are led to a beam combiner 34 via chopper disk 20. Chopper motor 31 rotates chopper disk 30, preferably using rotation of a stepping nature from one hole to another, keeping chopper disk 20 rotated at predetermined angles between steps to perform measurements. As a result detector 36 alternatively receives light with intensity Rs+Rp from the combination of the two split beams 32a,b, no light, light with intensity Rs from the first beam 32a, no light, light from the first beam 32a, light from the combination of beams 32a,b no light, light from the second beam 32a with intensity Rp, no light, light from the second beam 32a and so on. Combiner 34 need not be a polarizing combiner. From beam combiner 34 a combination of the split beams 32a,b, as far as passed by chopper disk is fed to detector 36. Detector 36 measures the intensities of the split beams 32a,b.

Computer 17 also receives detector results Rs(λ)+Rs(λ), Rs(λ), Rp(λ) of respective wavelengths dependent intensities measured by detector 36. Computer 17 also receives information about the rotational position of chopper disk 30, which enables determination which split beam or combination of split beams is corresponds to the various detection results. By using a single detector 36 errors due to calibration differences are avoided. Measurements made when both beams are blocked may be used to eliminate the effect of background light. Optionally, in a calibration step, differences in the properties of the components in the two optical paths followed by the split beams 32a,b can be determined and corrected for by measuring the ratio of the respective signals under the condition of measuring the light source intensity directly, without interaction with a sample. This results in a calibration curve. Such a calibration step may be performed for example once a month, once a year or once a week, dependent on the rate at which the optical properties of the components change.

Computer 17 receives the intensity measurements for a plurality of wavelengths. This can be realized in a number of ways, for example by using a broadband beam source 10 and a known array spectrometer in detector 36, which splits received broadband light into different wavelengths and uses an array of detectors to measure the intensities of the different wavelength components. Other possibilities include using a variable-wavelength monochromator in beam source 10 and scanning this monochromator through a number of wavelengths, computer 17 determining a ratio each time when light of a different wavelength is supplied. As another example, a broadband beam source 10 may be used in combination with a monochromator in the path of reflected beam 13 between sample 12 and beam splitter 14.

It should be emphasized that figures 1 and 1a only show an embodiment. In practice various additional measures may be taken. Although a reflective measurement, wherein light reflected by sample 12 is detected, has been illustrated it should be understood that transmissive measurements (wherein light transmitted by sample 12 is measured) may be used as an alternative, or in combination with reflective measurement. Similarly, the design of chopper disk 30 is merely shown by way of example. Other locations of holes for passing the beams may be used, in different combinations.

As another example, combiner 34 may have two outputs, for example a first output to which light from the first path 32a is passed by transmission and to which light from the second path 32b is passed by reflection. At a second output the roles of the paths 32a,b is interchanged. In this case separate detectors may be provided at the two outputs, for measuring the intensities in two different wavelength ranges for example.

As a further example, instead of a polarizing splitter 14, a non-polarizing splitter may be used, in combination with a polarizing combiner 34 (that is, a combiner which passes only one polarization direction of the light from one path 32a and only another polarization direction of the light from the path 32b to detector 36). In a yet further example, a non-polarizing splitter 14 and combiner 34 may used, in combination with polarization filters (not shown) in paths 32a,b.

Figure 2 shows a flow-chart of computations performed by computer 17. In a first step 21 computer 17 receives the results Rs(λ) Rp(λ) obtained intensity measurements by detector 36 at different positions of chopper disk 30 for reflected or transmitted light as a function of wavelength λ. Results for a plurality of wavelengths λ are received. In a second step computer 17 computes ratio's Rs(λ)/Rp(λ) of these results for a plurality of wavelengths λ. Preferably, the results are corrected for differences in the properties of the components in the two optical paths followed by the split beams 32a,b with the help of a calibration curve.

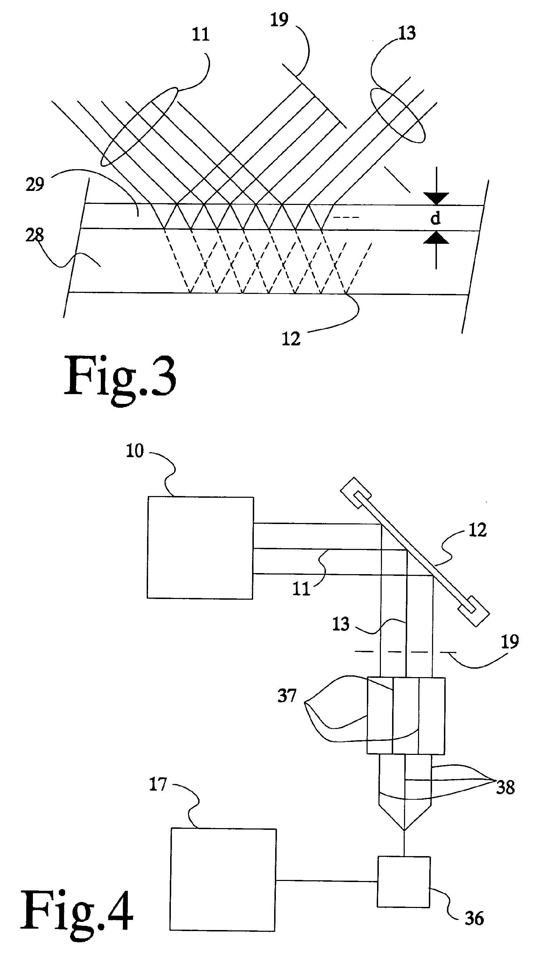

Figure 3 shows an example of a very simple coating configuration with a sample 12 comprising a substrate 28 and a coating 29. At the surface of coating 29 incoming beam 11 is partly reflected and partly transmitted. The transmitted part is partly reflected internally at the interface of coating 29 and substrate 28. Part of the reflected beam leaves the coating, to join the part of the beam that is reflected at the surface of coating 29, to form the reflected beam 13. In the case of a transmissive substrate, the beamwidth and to the position of aperture 19 (symbolically shown close to coating 29) transverse to the beam are preferably selected so that both parts of the beam that are reflected from the surface and parts of the beam that are reflected from the back of substrate 28 are passed to splitter 14. Thus, by using a specially broad (and sufficiently uniform) light source, secondary beams coming from the back of the substrate and interreflections within the substrate can also be included in the measurement. There are two relevant polarization directions, i.e. the direction normal to the plane of incidence (perpendicular to the plane of figure 3) and the direction parallel to the plane of incidence (in the plane of figure 3 and perpendicular to the direction of the beam). For each polarization direction a different fraction of the beam 11 is reflected at the various interfaces. Moreover the beam suffers phase delay and absorption in coating 29.

As a result both the amplitude ratio and the relative phase of the polarization components in the reflected beam 13 may be different from that in the incoming beam 11. The changes may depend on the wavelength λ, the angle of incidence and on parameter values such as the thickness of the coating, its index of refraction, which may depend on wavelength, its absorption coefficient β which may depend on wavelength etc. Of course more complicated coatings, comprising for example multiple layers, are possible. It may be noted that, when splitter 14 is oriented so that the polarization components in the plane of incidence and perpendicular to the plane of incidence are split off, the ratio of the resulting amplitudes of reflection for light with these respective polarization direction is available as a function of wavelength, but information about their relative phase shift is not available.

The effect of the coating on the intensity of the polarization components may be modelled mathematically. More information about the mathematics of such models can be found in an article titled "Mathematical Modelling of Optical Glazing Performance" by Peter A. van Nijnatten and published in the Proceedings of the SPIE Vol 2255 (1994) pages 753 to 762.

In a third step 23 computer 17 searches for values of parameters of a model that make the model predict the ratio's Rs(λ)/Rp(λ) that have been determined from the output signals of detector 36. In a first embodiment parameters that predict measured ratio's for a single angle of incidence of beam 11 on sample 12 are selected, but alternatively parameters are selected that predict measured ratio's for a combination of ratio's obtained for a number of angles, obtained for example by rotating sample 12 (and in the case of reflection also by displacing source 10 or the arrangement starting from splitter 14 to ensure that the reflected beam reaches splitter 14).

Dependent on the need values may be searched e.g. for parameters like a thickness of a coating layer and/or for its complex refractive index, or of a plurality of coating layers. Other parameters, for which predetermined predicted values are available may be set to the predetermined value. Computer 17 selects a set of values for adjustable parameters of the model that minimizes a measure of discrepancy between ratio's that are predicted by the model and the ratio's obtained from detector measurements. Methods for searching parameter values for models in general are known per se any suitable method may be used.

It must be emphasized that preferably only the ratio's Rs(λ)/Rp(λ) between intensities of different components of light that has been affected by the sample are allowed to affect the estimated parameter values. The search for parameter values is preferably arranged so that the result is invariant for (i.e. not affected by) differences in measured values that do not result in different ratio's Rs(λ)/Rp(λ). In this case difference absolute values, or ratio's between intensities of light that has not been affected by the sample on one hand and light that has been affected by the sample etc. do not affect the search result in so far as these differences do not affect the ratio's Rs(λ)/Rp(λ). This may be realized for example by using only the ratio's Rs(λ)/Rp(λ) as input data for the search. But other methods may be used to realize this effect, such as for example by using separate measured Rs(λ) and Rp(λ) values and including a (preferably wavelength dependent) calibration ratio to correct these values Rs(λ) and Rp(λ) in the model, and including a search for values of the calibration ratio that provides an optimal fit. However, although, without deviating from the invention such other values ratio's may possibly be used for example to speed up the process of parameter searching for example by providing initial parameter estimates.

In the case of an inspection process computer 17 determines in a fourth step 24 whether the parameter values that have been determined in third step 23 are within a predetermined range defined for acceptable products. If so sample 12 is accepted in a fifth step 25, if not sample 12 is rejected in a sixth step 26. Subsequently the process returns to first step 21 for a new inspection. In an embodiment the position of sample 12 relative to beam source 10 and beam splitter 14 is scanned to inspect a range of positions on sample 12. If so, the process for the sample terminates in rejection once the sample is rejected in sixth step 26, otherwise the process continues from fifth step 26 for successive positions on sample 12.

It should be appreciated that this type of inspection is only one application of the invention. In another application the computed parameter value may be used as a feedback signal to control process parameters of a process by which the coating is manufactured. In yet other applications the computed parameter value may be used to diagnose errors or to evaluate different possible coatings or coating processes.

When transmissive measurements are used, the ratio's Ts(λ)/Tp(λ) between intensities of different polarization components Ts(λ), Tp(λ) of transmitted light are determined for different wavelengths and used to estimate the parameters. In a further embodiment, ratio's Ts(λ)/Tp(λ) of transmitted light and ratio's Rs(λ)/Rp(λ) of reflected light are in combination to estimate the model parameters.

It is not always necessary to make a parameter fit. The range of acceptable parameter values together with the model can be used to define ranges of combinations of measured ratio's for different wavelengths that are acceptable. These ranges include the predicted ratio's for all possible acceptable combinations of parameter values plus surrounding values of the ratio's whose deviation from the predicted values may be attributed to noise. In this case the ratio's can be used as index for a lookup table which stores inspection results corresponding to ratio values, or as argument for an evaluation function (e.g. for a properly "trained" function of a neural network) that produces such an inspection result. In an embodiment it may be verified directly whether the combination of measured ratio's is within these ranges of ratio's, or whether a combination of component intensity values Rs(λ), Rp(λ) or Ts(λ), Tp(λ) corresponds to such a ratio (without necessarily computing the ratio). In none of these cases a model fit is needed.

It should be noted that the measurement of ratio's by the arrangement of figure 1 is not sensitive to a number of errors due to misalignment of sample 12. One beam 13 enters splitter 14 from sample 12. Errors due to sample misalignment that affect both polarization components in the same way (loss of intensity) do not effect the ratio. The splitter/combiner arrangement can be realized at low cost.

Figure 4 shows an embodiment wherein a plurality of splitter/chopper/combiner arrangements 37 in parallel, with a detector 36 shared by the arrangement in time-multiplex fashion. Fibre optic couplings 38 between arrangements 37 and shared detector 36 may be used as feeds to detector. Most losses in the coupling to detector 36 affect the polarization components from an arrangement 37 in the same way, because they travel through the same path, so that the measured ratio's are not affected. Even if the components are affected differently by coupling losses, the difference is constant, independent of the sample and can be easily corrected for in computer 17. This makes it possible to perform measurements at different positions on a coating or at different stages in the application of a coating on a product or on different coatings on different products at high speed at low cost.

Preferably, it is ensured that detector 36 receives light from one sample location at a time. This may be realized by using synchronized choppers 30 (not shown) in arrangements 37 for the different locations, so that one arrangement at a time passes light. Alternatively an additional chopper or a multiplexer (not shown) may be included between arrangements 37 and detector 36 to pass light alternately from different arrangements. Although it is preferred to pass light from one arrangement at a time, it will be appreciated that other embodiments may be used wherein combinations of light from different arrangements 37 are passed, when the contribution of one arrangement can be computed from a plurality of such combinations or when the parameters may be computed for a combination.

Instead of optical fibres 38 other couplings may be used, such as beam paths defined by mirrors. It will be appreciated that one of the attractive properties of the embodiment is that any coupling will do since both components travel to detector 38 via the same path. This makes it possible to use a mechanically simple but optically relatively complicated coupling like a fibre to share detector 38.

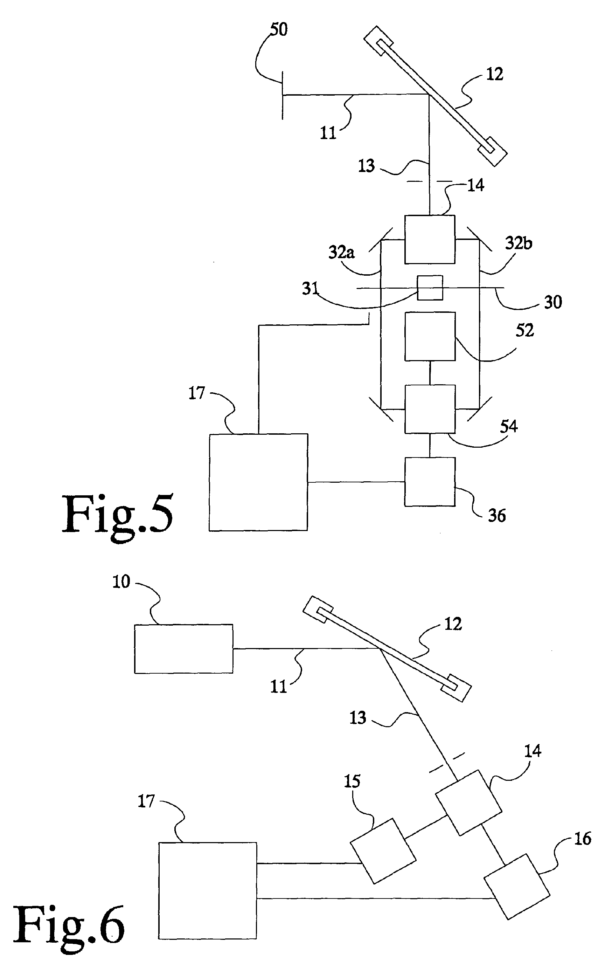

Figure 5 shows a further embodiment wherein splitter 14 and a splitter/combiner 54 are used for feeding light from a light source 52 to the sample 12. Original light source 10 has been replaced by a mirror 50. Light source 52 is coupled to splitter/combiner 54. Splitter/combiner 54 receives a beam from light source 52 and feeds this beam to one or both paths to splitter 14. Splitter 14, which acts in reverse as a combiner, feeds the beam (or beams) to sample 12, which reflects (or in an alternative embodiment transmits) the beam to mirror 50. Mirror 50 reflects the beam back to sample which reflects (or transmits) the beam to splitter 14, where it is split and fed to splitter/combiner 54 which combines the split beams and feeds them to detector 36. Instead of mirror 50 a retroreflector may be used. Retroreflectors are known per se and contain for example a combination of mirrors or prisms that are arranged so that an incident beam is reflected back along its path, independent of the angle of incidence.

This means that the detected intensities are the products of dual reflections (R²) or transmissions (T²). Optionally, a polarization rotator (not shown) may be inserted in the path of the beam between mirror 50 and sample 12 to select the types of reflection that are combined in a returning polarization component.

Computer 17 uses an adapted model to account for the double reflection or transmission, but otherwise computer 17 estimates parameters as before. It should be appreciated that different configurations are possible dependent on whether on one hand light from source 52 is passed through one branch to splitter 14, through the other or both and on the other hand dependent on the branch or branches from which intensity is measured.

Figure 6 shows an embodiment wherein two detectors 15, 16 are used so that no combiner is needed. It will be appreciated that this also makes it possible to measure intensities of different polarization components from which a ratio of intensities can be computed. However in this case the ratio of sensitivities of both detectors 15, 16 should be carefully controlled. The latter is less of a problem for the apparatus of figure 1, since a single detector is used in that apparatus.

It will be appreciated that a chopper is not strictly necessary in this embodiment, the chopper may be omitted to simplify the construction. However, preferably one ore more choppers are included so that detectors 15, 16 alternately produce outputs signals while receiving a beam and while not receiving a beam. Similar to the preceding embodiments, this embodiment may be used to supply the beam through splitter 14, or to share detectors, but it will be appreciated that more corrections are needed in the latter case in this embodiment, because the paths to the shared detectors 15, 16 are different for the polarization components.

It will be appreciated that the invention is not limited to the embodiments that have been used as illustrations. For example, preferably a splitter 14 with a predetermined orientation relative to the plane of incidence is used to produce split polarization components with polarization in the plane of incidence and perpendicular to that plane respectively. However, without deviating from the invention a differently oriented splitter may be used. The different orientation may be accounted for in the model used by computer 17 when it determines the parameters of the coating. The orientation may even be adjustable, or measurements (ratio's) obtained for different orientations may be used together in the determination of coating parameters. But preferably, measurements for only one orientation are used, since this suffices and requires a minimum of measurements.

As another example, although the invention has been described for an implementation with a chopper disk that moves apertures into and out of both beam paths 32a,b, it should be understood that, when a chopper is used, it may suffice to use a chopper that covers only one of the beam paths 32a, b to move apertures into and out the beam paths 32a,b. In this case, at one time the intensity of one component Rs(λ) or Rp(λ) is measured and at another time the intensity of the sum Rs(λ)+Rp(λ) is measured. The ratio of the measurements Rs(λ)/(Rs(λ)+Rp(λ)) or Rp(λ)/(Rs(λ)+Rp(λ)) is computed. This ratio is a one to one function of the ratio Rs(λ)/ Rp(λ) and suffices for the computation of coating properties. In a similar embodiment a chopper may be used which covers both beam paths and has a position wherein beams are passed along both paths as well as a position wherein one of the beams is passed.

As another example, instead of a chopper disk (fig 1a) other kinds of movement mechanisms (e.g a translational back and forth movement) may be used to move an aperture which passes light between splitter 14 and combiner 34 into and out of a split beam. Flipping mirrors may be used to realize a chopper instead of apertures. However, the use of temporary transmission blocking by moving an aperture has the advantage that transmission differences between the branches through which the split components of the beam pass separately are reduced.

As yet another example, although measurement and processing by computer 17 of intensities of both split beams has been described, it will be appreciated that this is not necessary. For example, in another embodiment the intensity of beam source 10 may be regulated so that one component has a predetermined value.

Furthermore, it should be appreciated that the role of a detector and the beam source may be interchanged in any of the embodiments. This results in an alternative embodiment wherein the beam from the beam source is split and the split components are chopped before being combined by splitter 14, acting in reverse, to generate a combined beam with polarization components from the respective paths 32a,b. In this case a single detector may be used to detect light from the sample that results alternately from different components or combinations thereof that have been passed by the chopper.

Furthermore, although an appropriately programmed computer 17 have been shown as means for determining a properties of the sample such as a parameter value, it will be appreciated that other means may be used. For example, a plurality of cooperating computers may be used, or hardware that is dedicated to perform equivalent computations. As another alternative a plurality of reference coating spots with different properties may be used (e.g. with a thickness that changes as a function of position) in combination with a reference ratio measuring equipment. In this case a measurement of the wavelength dependent ratio of an inspected coating may be compared with wavelength dependent ratio's of the reference spots, to determine the reference spot that best matches the measured ratio's. Furthermore, as described a lookup table may be used (implemented for example as a memory that stores parameter values that are addressable with measured ratio's), or a trained function, such as a neural network function that computes parameter values or inspection decisions as a function of measured ratio's.

## Claims

1. An optical monitoring apparatus comprising
- a beam source;
- a beam path wherein a beam of light from the beam source, in operation, will be reflected and/or transmitted by a sample;
- a beam path splitter located in the path, the beam path splitter splitting a unitary path part into at least a first and second sub-path, the unitary path part running from the sample to the beam path splitter;
- a polarizer in the beam path splitter or in the first and second subpart arranged to pass only respective components of the beam of mutually different selected polarization directions along at least part of the first and second sub-path;
- a detector arrangement arranged to receive the beam after reflection and/or transmission by the sample and to measure information that is at least representative of a spectrum of ratio's between intensities of the components after they have been affected by the sample, the detector arrangement distinguishing the components dependent on whether the components have travelled through the first or second sub-path respectively;
- means for determining a property of the sample from the measured information.

2. An optical monitoring apparatus according to Claim 1, wherein the beam travels from the sample to the detector arrangement through the beam path splitter.

3. An optical monitoring apparatus according to Claim 2, wherein the detector arrangement comprises
- a detector,
- a beam combining optical element arranged to receive the split components and to combine the split components into a detector input beam, and
- a chopper arranged to chop the components between the beam path splitter and the beam combining optical element so that temporally successive contents of the detector input beam contain the components in mutually different proportions.

4. An optical monitoring apparatus according to Claim 3, wherein the beam path splitter is a polarizing splitter and/or the beam combining optical element is a polarizing combiner.

5. An optical monitoring apparatus according to Claim 3 or 4, wherein the detector is shared by a plurality of sub-arrangements of a beam path splitter, chopper and combiner.

6. An optical monitoring apparatus according to any one of Claims 3 to 5 , wherein the chopper contains one or more movable screen parts, for movement into and out of at least one of the sub-paths of the split components.

7. An optical monitoring apparatus according to any one of Claims 2 to 6, wherein the beam source is arranged to direct the beam at the sample through the beam path splitter, the path folding back upon itself after reflection or transmission by the sample.

8. An optical monitoring apparatus according to Claim 7, comprising a mirror or retroreflector in the path of the beam, located separate from the sample to reflect the beam after reflection or transmission by the sample, back to the beam path splitter via the sample in reflection or transmission.

9. An optical monitoring apparatus according to any one of the preceding Claims, arranged to polarize the components along mutually orthogonal polarization directions oriented at respective predetermined orientations relative to a plane of incidence on the sample, the property of the sample being determined from the measured information for a single predetermined direction for each split component.

10. An optical monitoring apparatus according Claim 9, wherein the polarization directions correspond to a direction of polarization the plane of incidence and a direction of polarization perpendicular to the plane of incidence.

11. An optical monitoring apparatus according to any one of the preceding Claims, comprising a computer programmed to fit parameters of a model that predicts values of the ratio's for different wavelengths, the computer fitting the parameters so that a measure of discrepancy between the predicted ratio's and the detected ratio's is minimized.

12. An optical monitoring apparatus according to Claim 11, wherein the computer is programmed so that the value of a fitted parameter is substantially invariant for changes in the intensities that do not affect said ratio's.

13. An optical monitoring apparatus according to Claim 1, comprising
- a further beam path splitter for splitting the beam from the beam source;
- a chopper located between the further beam path splitter and the first mentioned beam path splitter;
- the first mentioned beam path splitter acting to combine the components from the further beam path splitter into a beam that is projected onto the sample.

14. A method of determining a property of a coating on a substrate, the method comprising
- providing a sample with a coating thereon;
- illuminating the sample with a beam of light along a path so that the beam is transmitted and/or reflected by the sample;
- splitting a unitary path part of the path into first and second split sub-paths, the unitary path part running from the sample;
- selectively passing components of the beam with mutually different directions of polarization through the first and second sub-path;
- measuring information that is at least representative of a spectrum of ratio's between intensities of the components, the components being distinguished for the measurement dependent on whether the component has travelled through the first and second sub-path respectively;
- determining a property of the coating from the measured information.

15. A method according to Claim 14, comprising temporally chopping the components in at least one of the sub-paths.

16. A method according to Claim 14 or 15, wherein a thickness and/or an absorption coefficient and/or complex refractive index of one or more coating layer is determined from the spectrum of ratio's.

17. A method according to Claim 14 or 15, wherein said determining of the property comprises determining a pass/fail result of inspection.

18. A method according to any one of Claims 14 to 17, wherein a splitter is used to split the beam path, the beam being directed at the sample through splitter and the unitary path part and received back through the unitary path part and the splitter for detection.

19. A method according to any one of Claims 14 to 18, wherein a splitter is used to split the beam path, the beam received from the sample via the unitary path part, split into components that pass through the first and second sub-path, at least one of the components being chopped, the components being combined into a detector input beam which is fed to a detector to measure the information about the ratio's.

20. A method according to Claim 19, wherein the detector is shared between a plurality of sub arrangements of a splitter, a chopper and a combiner, the detector being used to measure the information about the ratio's successively for respective sub-arrangements.
